# FASCICULE DE BREVET EUROPEEN

(11) **EP 1 108 929 B1**
(45) Date de publication et mention de la délivrance du brevet: **19.05.2004**
(21) Numéro de dépôt: 00870296.1
(22) Date de dépôt: 13.12.2000
(51) Int. Cl.: F16K 3/08

(54) **Organe de réglage du débit d'un fluide**
Vorrichtung zum Regeln des Durchflusses eines Fluids
Fluid flow control device

(30) Priorité: 16.12.1999 EP 99870260
(43) Date de publication de la demande: 20.06.2001
(73) Titulaire: Techspace Aero S.A., 4041 Herstal (BE)
(72) Inventeur: Delobel, Pierre, 4031 Angleur (BE)
(74) Mandataire: Van Malderen, Michel

(56) Documents cités:
- US-A- 2 589 188
- US-A- 5 213 307
- US-A- 5 342 025
- US-A- 5 462 085
- "REMOTELY-CONTROLLED VARIABLE-ORIFICE VALVE" NTIS TECH NOTES,US,US DEPARTMENT OF COMMERCE. SPRINGFIELD, VA, 1 octobre 1990 (1990-10-01), page 863 XP000170857 ISSN: 0889-8464

## Description

La présente invention se rapporte à un organe de réglage du débit d'un fluide tel qu'une vanne.

Plus précisément, la présente invention se rapporte à un organe de réglage continu du débit d'un fluide.

Le document US-A-5 342 025 décrit un dispositif conforme au préambule de la revendication 1.

Les vannes, qui sont des organes de réglage du débit d'un fluide, sont utilisées dans toutes sortes de circuits pneumatiques et hydrauliques. Elles permettent de régler le débit d'un fluide en générant une perte de charge au sein dudit fluide à l'aide d'un obturateur mobile. Selon la position dudit obturateur mobile, on pourra générer une perte de charge plus ou moins importante.

Dans le cas où l'on désire obtenir un réglage continu du débit, de tels obturateurs mobiles seront pilotés par un actionneur qui peut être un moteur électrique ou un vérin, et dont la commande permettra d'obtenir une position stable dudit obturateur, et ceci quel que soit le déplacement souhaité.

Habituellement, les organes de réglage continu du débit d'un fluide sont composés d'un élément, appelé aussi conduit d'écoulement, permettant le passage dudit fluide et dans lequel l'obturateur mobile est placé, d'un actionneur qui permettra de commander cet obturateur mobile ainsi que d'un moyen d'accouplement de l'actionneur audit élément permettant le passage dudit fluide.

Cet accouplement est généralement constitué par plusieurs pièces de liaison qui permettent d'agir sur l'obturateur. Des joints sont également prévus afin de confiner le fluide au niveau de cet obturateur. Ces joints doivent également être compatibles avec le mouvement des différentes pièces de liaison.

La présence de tels joints pour assurer l'étanchéité des pièces mobiles de l'accouplement conduit à la présence de frottements parfois importants qui ont pour conséquence de dégrader la précision de l'organe de réglage ou de devoir utiliser un actionneur plus puissant.

En outre, de tels joints peuvent encore conduire à des fuites de fluide ou à un risque de défaillance du fait de leur présence même. La durée de vie d'une vanne utilisant de tels joints sera souvent limitée.

De plus, l'obligation d'accoupler le moteur électrique à l'obturateur mobile conduit souvent à une imprécision de la position de ce dernier organe, et de ce fait à un mauvais contrôle du réglage du débit du fluide.

Finalement, l'accouplement est souvent réalisé à l'aide de pièces de liaison coûteuses. En outre, la présence de ces pièces de liaison augmente l'encombrement et la masse dudit organe de réglage ou de la vanne.

Le document WO-A-99/56 061 décrit une vanne à flux cyclique pour l'alimentation en mélange carburant d'une chambre de combustion. Le conduit d'écoulement contient un obturateur rotatif. Celui-ci se ferme lorsque deux lumières pratiquées dans la partie fixe de l'obturateur sont obturées par une pièce de type rotor munie d'aubes, elle-même actionnée, via un arbre, par un moteur électrique également inclus dans le conduit. Ce dispositif permet d'obtenir un flux cyclique, entre deux valeurs extrêmes de flux, l'une haute, l'une basse.

Le document US-A-4 328 831 propose un dispositif de vanne similaire pour l'injection de boues, où un obturateur rotatif est relié par un arbre à un actionneur compris dans le conduit d'écoulement. Dans ce cas particulier, l'actionneur rotatif est de type pneumatique.

Dans les deux cas décrits, l'actionneur, constituant une entité étanche baignant dans le fluide, est généralement disposé dans l'axe d'écoulement et perturbe donc celui-ci. De plus, ces dispositifs ne sont guère compatibles avec les exigences de résistance et robustesse liées aux pressions élevées et à l'utilisation de fluides cryogéniques ou très chauds. En effet, des câbles électriques ou des tuyaux d'alimentation en air comprimé baignent dans le fluide et traversent le corps de vanne au niveau de sa paroi latérale. De plus, l'actionneur est relié à l'obturateur par un arbre plus ou moins long, ce qui peut nuire à la précision de l'obturation.

Le document DE-A-196 19 755 propose un dispositif de vanne à papillon de préférence destiné à la carburation pour un moteur à explosion. La vanne à papillon, permettant de régler l'admission de fluide au travers d'un conduit est commandée, via un arbre, situé transversalement par rapport au conduit. L'arbre est actionné par un moteur électrique rotatif à aimants permanents, fixé dans un logement attenant au conduit. Le rotor de ce moteur est un disque magnétique quadripolaire, ce qui permet le positionnement précis de l'obturateur. Afin d'empêcher le contact du mélange de carburant avec l'actionneur, celui-ci doit être isolé du conduit par la présence d'un ou plusieurs joints au niveau de l'arbre.

Dans l'état de la technique mentionné ci-dessus, on s'est souvent attaché à décrire la forme que doit prendre l'obturateur pour permettre à la vanne d'assurer des fonctionnalités très spécifiques, plutôt qu'à résoudre les problèmes mentionnés par ailleurs.

Le brevet US-A-5 342 025 décrit une vanne à contrôle de flux de type à contrôle magnétique comprenant un anneau aimanté rotatif, dit commandé, se trouvant à l'intérieur d'un tube métallique et connecté à la partie mobile de l'obturateur de la vanne. La partie fixe de l'obturateur est solidaire d'un deuxième tube métallique fixé au premier tube. Un deuxième anneau aimanté, dit de commande, est disposé rotatif sur une bride à l'extérieur du deuxième tube métallique et son actionnement entraîne à son tour en rotation l'anneau commandé et par suite la partie mobile de l'obturateur. Ce dispositif permet d'éliminer les fuites liées à la présence de joints pour le passage des organes de commande dans les vannes conventionnelles.

De manière similaire, le brevet US-A-2 589 188 décrit une vanne à contrôle magnétique où l'obturateur est connecté par un arbre à un aimant permanent interne au corps de vanne et monté rotatif, lequel est actionné par un aimant permanent externe à l'enveloppe, également monté rotatif.

Dans le document "Remotely-Controlled Variable-Orifice Valve", NTIS Tech Notes, US Department of Commerce, Springfield, VA, US (1990)October, on décrit une vanne à orifice variable commandée à distance. L'obturateur est constitué d'un disque fixe présentant des orifices couplé à un disque tournant présentant le même dessin d'orifices. Le disque tournant est commandé par un actionneur hydraulique rotatif. La position angulaire de l'actionneur et du disque tournant est mesurée par un encodeur angulaire à arbre.

La présente invention vise à proposer une solution qui remédie aux différents inconvénients présentés ci-dessus pour des organes de réglage continu du débit d'un fluide ou vannes selon l'état de la technique.

Plus précisément, la présente invention vise à proposer un organe de réglage continu du débit d'un fluide qui présente une masse et un encombrement réduits, et qui permet en outre d'atteindre une fiabilité et une précision optimisées.

A titre complémentaire, la présente invention vise à proposer un organe de réglage continu du débit d'un fluide qui présente une durée de vie accrue pour un coût réduit par rapport aux solutions de l'état de la technique.

La présente invention vise également à proposer un organe de réglage continu du débit d'un fluide qui présente une consommation électrique limitée.

Enfin, la présente invention vise à proposer un organe de réglage continu du débit d'un fluide qui permet son utilisation aussi bien dans le cas de pressions faibles que dans le cas de pression élevées ou très élevées, ainsi que dans des conditions extrêmes de température.

La présente invention se rapporte à un organe de réglage continu du débit, d'un fluide, de préférence sous pression, comprenant au moins :
- une enveloppe permettant le passage du fluide et présentant un orifice d'entrée et un orifice de sortie,
- un obturateur mobile,
- un actionneur muni d'une partie mobile rotative appelée rotor, connectée mécaniquement, à l'intérieur de l'enveloppe, à l'obturateur sans moyens d'étanchéité de la connexion et présentant au moins une lumière en son centre pour que le fluide traverse l'organe de réglage lorsque l'obturateur est en position ouverte, entre l'orifice d'entrée et l'orifice de sortie,
caractérisé en ce que l'actionneur comprend un moteur électrique rotatif sans balais, dont la partie fixe appelée stator coopère avec le rotor pour amener l'obturateur en rotation, le rotor et le stator ayant essentiellement la forme de cylindres coaxiaux d'axes coïncidant avec l'axe d'écoulement du fluide et le stator étant en contact direct avec la paroi interne de l'enveloppe.

De manière particulièrement avantageuse, l'élément mobile de l'obturateur est en contact direct avec l'actionneur, sans présence de joints d'étanchéité.

Toujours selon l'invention, l'obturateur est assemblé sur un mécanisme de transmission lui-même piloté par l'actionneur. Le mécanisme de transmission peut soit être un réducteur de vitesse ou comporter des moyens assurant un mouvement linéaire axial de l'obturateur.

Avantageusement, l'obturateur mobile est constitué d'une grille mobile se déplaçant devant une grille fixe ou d'un papillon obturant progressivement une lumière.

De préférence, l'enveloppe contient au moins un capteur de position, de préférence baignant dans le fluide et l'incertitude sur la position de l'obturateur est d'au plus un degré.

Un autre aspect de la présente invention concerne l'utilisation d'un organe de réglage continu du débit d'un fluide, selon les caractéristiques précédentes, dans le cas où ledit fluide est porté à des températures très basses ou très élevées ou à des pressions très élevées.

La figure 1 représente une vue en coupe longitudinale d'un organe de réglage continu du débit d'un fluide selon la présente invention.

La figure 2 représente une section de détail selon le plan C-C de la figure 1.

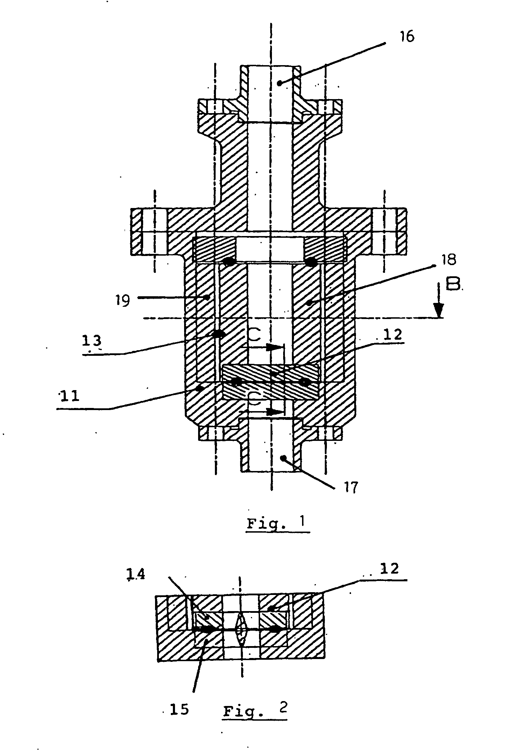

Une forme d'exécution préférée de l'invention est représentée aux figures 1 et 2. Dans cette forme, l'organe de réglage continu du débit d'un fluide comporte un élément de passage du fluide ou conduit d'écoulement 11. Celui-ci permet de guider l'écoulement du fluide entre un orifice d'entrée 16 et un orifice de sortie 17 et correspond à une enveloppe à l'intérieur de laquelle se trouve un moteur électrique rotatif sans balais 13 et un obturateur mobile 12 directement assemblé sur le moteur 13, sans arbre ou au moyen d'un arbre très court. L'originalité de l'invention réside en particulier dans le fait que le moteur rotatif sans balais est en contact intime avec le fluide, ce qui ne nécessite pas de joints d'étanchéité pour confiner le fluide dans le conduit d'écoulement au niveau de l'obturateur.

La figure 2 détaille la structure dudit obturateur mobile 12 en section selon le plan C-C. Cet obturateur mobile est composé d'une grille mobile 14 et d'une grille fixe 15, la grille mobile 14 étant capable de se déplacer devant la grille fixe 15. La grille mobile 14 est fixée au rotor 18 du moteur rotatif tandis que la grille fixe 15 est fixée au corps de vanne 11, constituant le conduit d'écoulement. La section de passage du fluide est donc variable suivant la position angulaire de la grille mobile 14. Le mouvement de rotation de la grille mobile 14 est donc directement commandé par le mouvement du rotor 18, d'où une plus grande précision et une plus grande fiabilité au niveau du réglage continu du débit du fluide par rapport aux solutions proposées dans l'état de la technique. Une étude a montré que la position de l'obturateur 12 devait être connue à un degré près, ce qui est possible en utilisant un capteur de position.

L'organe de réglage du débit selon la présente invention peut être utilisé quelles que soient les conditions de pression et de température. Toutefois, le concept inventif n'est évidemment utilisable que si les conditions d'environnement du fluide (nature chimique, propreté, etc.) sont compatibles avec les limites du moteur. Avantageusement, l'organe de réglage peut être utilisé dans des conditions de pression particulièrement élevées (pouvant atteindre plusieurs dizaines de MPa). En effet, étant donné que le moteur équipant cette vanne est en équipression avec le fluide, l'organe de réglage du débit selon l'invention garantit une bonne sécurité, surtout dans des conditions de pression où l'étanchéité du système est particulièrement difficile à réaliser. En particulier, des expériences ont montré que l'organe de réglage du débit selon l'invention pouvait supporter une pression de 20 MPa.

Les fluides typiquement utilisés avec ce type de vanne sont des fluides cryogéniques tels que l'hydrogène à basse température (par ex. -150°C) ou l'hydrogène liquide (par ex. -250°C) ou à l'inverse des fluides extrêmement chauds comme l'hydrogène ou la vapeur d'eau à une température par exemple de l'ordre de 200°C.

La durée de vie de l'organe ne sera pas non plus dépendante de la durée de vie des joints d'étanchéité, ceux-ci ayant disparu, mais plutôt de la durée de vie du moteur. Ainsi, comme le moteur présente une durée de vie de plusieurs millions de cycles tandis que les joints d'étanchéité habituellement utilisés ont une durée de vie au plus limitée à plusieurs milliers de cycles, on pourra de manière particulièrement avantageuse augmenter la durée de vie globale de la vanne, en particulier si les conditions d'utilisation ne sont pas trop sévères pour le moteur.

De même, en proposant une solution selon la présente invention, on peut réduire la masse et l'encombrement de l'organe d'un facteur deux à trois par rapport aux solutions présentées dans l'état de la technique. A titre d'exemple, la masse du dispositif selon la forme d'exécution préférée de l'invention telle que réalisée est de 8 kg et la longueur de la vanne est de 160 mm.

Enfin, un avantage supplémentaire de l'organe de réglage continu du débit d'un fluide selon l'invention est que son utilisation requiert une consommation électrique limitée. La consommation électrique pour un organe de réglage réalisé selon la forme préférée d'exécution de l'invention n'est ainsi que de 20 W.

L'invention n'est bien entendu pas limitée à cette forme d'exécution particulière. Beaucoup d'autres applications sont possibles en utilisant des obturateurs de formes diverses et soumis à des mouvements rotatifs ou linéaires.

## Revendications

1. Organe de réglage continu du débit d'un fluide, de préférence sous pression, comprenant au moins :
- une enveloppe (11) permettant le passage du fluide et présentant un orifice d'entrée (16) et un orifice de sortie (17),
- un obturateur mobile (12),
- un actionneur (13) muni d'une partie mobile rotative appelée rotor (18), connectée mécaniquement, à l'intérieur de l'enveloppe (11), à l'obturateur (12) sans moyens d'étanchéité de la connexion et présentant au moins une lumière en son centre pour que le fluide traverse l'organe de réglage lorsque l'obturateur (12) est en position ouverte, entre l'orifice d'entrée (16) et l'orifice de sortie (17),
**caractérisé en ce que** l'actionneur comprend un moteur électrique rotatif sans balais, dont la partie fixe appelée stator (19) coopère avec le rotor (18) pour amener l'obturateur (12) en rotation, le rotor (18) et le stator (19) ayant essentiellement la forme de cylindres coaxiaux d'axes coïncidant avec l'axe d'écoulement du fluide et le stator (19) étant en contact direct avec la paroi interne de l'enveloppe (11).

2. Organe de réglage selon la revendication 1, **caractérisé en ce que** l'élément mobile de l'obturateur (14) est en contact direct avec l'actionneur (13).

3. Organe de réglage selon la revendication 1, **caractérisé en ce que** l'obturateur (12) est assemblé sur un mécanisme de transmission lui-même piloté par l'actionneur (13).

4. Organe de réglage selon la revendication 3, **caractérisé en ce que** le mécanisme de transmission est un réducteur de vitesse.

5. Organe de réglage selon la revendication 3, **caractérisé en ce que** le mécanisme de transmission comporte des moyens assurant un mouvement linéaire axial de l'obturateur.

6. Organe de réglage selon l'une quelconque des revendications 1 à 4, **caractérisé en ce que** l'obturateur mobile (12) est constitué d'une grille mobile (14) se déplaçant devant une grille fixe (15).

7. Organe de réglage selon l'une quelconque des revendications 1 à 4, **caractérisé en ce que** l'obturateur mobile (12) est constitué d'un papillon obturant progressivement une lumière.

8. Organe de réglage selon l'une quelconque des revendications précédentes, **caractérisé en ce que** l'enveloppe (11) contient au moins un capteur de position, de préférence baignant dans le fluide.

9. Organe de réglage selon la revendication 8, **caractérisé en ce que** l'incertitude sur la position de l'obturateur est d'au plus un degré.

10. Utilisation d'un organe de réglage continu du débit d'un fluide, selon l'une quelconque des revendications précédentes, dans le cas où ledit fluide est porté à des températures très basses ou très élevées ou à des pressions très élevées.

## Patentansprüche

1. Regelorgan für die kontinuierliche Durchflussregelung eines Mediums, vorzugsweise unter Druck, das mindestens folgende Elemente umfasst:
- einen Mantel (11), der den Durchfluss des Mediums ermöglicht und eine Einströmöffnung (16) und eine Ausströmöffnung (17) aufweist,
- einen beweglichen Verschlusskörper (12),
- einen Stellantrieb (13) mit einem beweglichen, drehbaren Teil, der als Rotor (18) bezeichnet wird und der im Inneren des Mantels (11) mechanisch mit dem Verschlusskörper (12) ohne Abdichtungselemente verbunden ist und in der Mitte mindestens eine Öffnung aufweist, damit das Medium durch das Regelorgan strömen kann, wenn sich der Verschlusskörper (12) zwischen der Einströmöffnung (16) und der Ausströmöffnung (17) in geöffneter Stellung befindet,
**dadurch gekennzeichnet, dass** der Stellantrieb einen bürstenlosen Elektromotor umfasst, dessen feststehender, als Stator (19) bezeichneter Teil mit dem Rotor (18) zusammenwirkt, um den Verschlusskörper (12) in Drehung zu versetzen, wobei der Rotor (18) und der Stator (19) im wesentlichen die Form von koaxialen Zylindern haben, deren Achse mit der Strömungsachse des Mediums übereinstimmt; dabei ist der Stator (19) in direktem Kontakt mit der Innenwand des Mantels (11).

2. Regelorgan nach Anspruch 1, **dadurch gekennzeichnet, dass** das bewegliche Element des Verschlusskörpers (14) in direktem Kontakt mit dem Stellantrieb (13) ist.

3. Regelorgan nach Anspruch 1, **dadurch gekennzeichnet, dass** der Verschlusskörper (12) mit einem Getriebe verbunden ist, das seinerseits durch den Stellantrieb (13) gesteuert wird.

4. Regelorgan nach Anspruch 3, **dadurch gekennzeichnet, dass** das Getriebe ein Untersetzungsgetriebe ist.

5. Regelorgan nach Anspruch 3, **dadurch gekennzeichnet, dass** das Getriebe Elemente umfasst, die für eine lineare Axialbewegung des Verschlusskörpers sorgen.

6. Regelorgan nach einem der Ansprüche 1 bis 4, **dadurch gekennzeichnet, dass** der bewegliche Verschlusskörper (12) aus einer beweglichen Lochscheibe (14) besteht, die sich vor einer festen Lochscheibe (15) bewegt.

7. Regelorgan nach einem der Ansprüche 1 bis 4, **dadurch gekennzeichnet, dass** der bewegliche Verschlusskörper (12) aus einer Drosselklappe besteht, die eine Öffnung allmählich verschließt.

8. Regelorgan nach einem der vorstehenden Ansprüche, **dadurch gekennzeichnet, dass** der Mantel (11) mindestens einen Lagesensor enthält, der vorzugsweise in das Medium eintaucht.

9. Regelorgan nach Anspruch 8, **dadurch gekennzeichnet, dass** die Messungenauigkeit bezüglich der Lage des Verschlusskörpers höchstens 1 Grad beträgt.

10. Verwendung eines Regelorgans für die kontinuierliche Durchflussregelung eines Mediums nach einem der vorstehenden Ansprüche im Falle von sehr tiefen oder sehr hohen Temperaturen oder sehr hohen Drücken des Mediums.

## Claims

1. Device for the continuous control of the outflow of a fluid, preferably pressurised, comprising at least:
- a casing (11) allowing the passage of the fluid and having an inlet opening (16) and an outlet opening (17),
- a movable obturator (12),
- an actuator (13) provided with a rotary movable part called a rotor (18), mechanically connected inside of the casing (11) to the obturator (12) without any sealing means for the connection and having at least one aperture in its centre so that the fluid can pass through the control device when the obturator (12) is in the open position, between the inlet opening (16) and the outlet opening (17),
**characterised in that** the actuator comprises a rotary electrical motor without brushes, the fixed part of which called the stator (19) co-operates with the rotor (18) in order to make the obturator (12) rotate, the rotor (18) and the stator (19) essentially taking the form of coaxial cylinders with axes aligned with the flow axis of the fluid and the stator (19) being in direct contact with the inner wall of the casing (11).

2. Control device according to Claim 1, **characterised in that** the movable part of the obturator (14) is in direct contact with the actuator (13).

3. Control device according to Claim 1, **characterised in that** the obturator (12) is assembled on a transmission mechanism, itself operated by the actuator (13).

4. Control device according to Claim 3, **characterised in that** the transmission mechanism is a speed reducer.

5. Control device according to Claim 3, **characterised in that** the transmission mechanism comprises means for allowing an axial linear movement of the obturator.

6. Control device according to any one of Claims 1 to 4, **characterised in that** the movable obturator (12) comprises a movable grid (14) that can move in front of a fixed grid (15).

7. Control device according to any one of Claims 1 to 4, **characterised in that** the movable obturator (12) comprises a butterfly nut that progressively seals an aperture.

8. Control device according to any one of the preceding claims, **characterised in that** the casing (11) comprises at least one position sensor, preferably immersed in the fluid.

9. Control device according to Claim 8, **characterised in that** the uncertainty over the position of the obturator is at the most of one degree.

10. Use of a device for the continuous control of the outflow of a fluid, according to any of the preceding claims, in cases where said fluid is brought to very low or very high temperatures or to very high pressures.
